Europäisches Patentamt

European Patent Office

Office européen des brevets

(11) Numéro de publication:

**0 058 611**
**A1**

(12) **DEMANDE DE BREVET EUROPEEN**

(21) Numéro de dépôt: **82400244.8**

(22) Date de dépôt: **11.02.82**

(51) Int. Cl.³: **A 01 M 21/04**

(30) Priorité: **17.02.81 FR 8103049**

(43) Date de publication de la demande:
**25.08.82 Bulletin 82/34**

(84) Etats contractants désignés:
**AT BE CH DE GB IT LI LU NL SE**

(71) Demandeur: **Rives, Gérard**
**37 Chemin de la Ségognole Noisy sur Ecole**
**F-77123 Le Vaudoue(FR)**

(72) Inventeur: **Rives, Gérard**
**37 Chemin de la Ségognole Noisy sur Ecole**
**F-77123 Le Vaudoue(FR)**

(74) Mandataire: **Barnay, André François et al,**
**Cabinet Barnay 80 rue Saint-Lazare**
**F-75009 Paris(FR)**

(54) Dispositif d'application d'un liquide pour le traitement ou la destruction de végétaux.

(57) L'invention concerne les appareils permettant d'humecter à volonté les végétaux que l'on veut détruire, par contact, à l'aide d'un herbicide ou traiter à l'aide d'un produit liquide.

Le dispositif objet de l'invention comprend un corps (1) dont l'arrière forme un réservoir (2) et la partie avant un capot (3) qui reçoit un élément humectable (4) et sous lequel tourne une brosse (5). L'élément (4) transporte par capillarité le liquide (9) du réservoir (2) à la brosse (5), laquelle l'applique aux végétaux par frottement.

FIG.1

EP 0 058 611 A1

Croydon Printing Company Ltd.

### Dispositif d'application d'un liquide
### pour le traitement ou la destruction de végétaux.

La présente invention se rapporte aux dispositifs d'application d'un liquide en vue du traitement ou de la destruction de végétaux, par humectation avec ledit liquide.

Dans des dispositifs connus de ce genre, une corde sortant d'un réservoir de liquide et imprégnée par capillarité est promenée sur les végétaux. De tels dispositifs sont d'un emploi malaisé; ils présentent une efficacité médiocre et manquent de précision. En effet, pendant leur utilisation, des gouttes de liquide peuvent s'échapper de manière inopportune et toucher les plantes et cultures qui doivent être épargnées par exemple au cours d'opérations de désherbage.

On connaît d'autres dispositifs avec lesquels on pulvérise le produit liquide, créant ainsi un brouillard qui ne manque pas d'atteindre les plantes et cultures avoisinantes que l'on désire préserver.

On connaît encore un dispositif comprenant en tant qu'organe applicateur du liquide un rouleau relié à un réservoir par un élément véhiculant le liquide par capillarité. Un tel rouleau applicateur a tendance à coucher et à écraser les végétaux à traiter, de sorte que les plus petits de ceux-ci sont recouverts par les plus grands et ne sont pas convenablement traités. De plus, l'application de liquide n'est pas uniforme en cas de sol inégal, le rouleau ne pouvant atteindre les creux. En outre, de courtes herbes poussant entre des cailloux recevront trop peu de liquide de la part du rouleau. Par ailleurs, ce dispositif connu est doté d'un manche relié de manière souple au support du rouleau applicateur, ce qui rend malaisé un usage autonome du dispositif.

Afin de remédier à ces inconvénients, l'invention a pour objet un dispositif du genre décrit en dernier lieu, caractérisé par le fait qu'il comporte un manche lié rigidement au support de l'organe applicateur et que cet organe est une brosse. Ce dispositif présente ainsi la forme d'un balai qu'il est aisé de promener sur les végétaux à traiter ou à détruire, ceux-ci étant atteints de manière optimale par les poils de la brosse, capables de s'introduire entre les tiges des végétaux ou dans les interstices entre cailloux, l'ensemble de la brosse épousant par ailleurs sans difficulté toutes les irrégularités du sol.

De préférence, la brosse est mobile dans son support et entre en contact avec l'élément véhiculant le liquide seulement lorsque le dispositif repose par ladite brosse sur les végétaux. Ainsi, la brosse n'est alimentée en liquide que pendant l'utilisation effective du dispositif. Il est donc possible de tenir toujours humide, par capillarité, l'élément véhiculant le liquide, qui touche la brosse lorsque celle-ci vient toucher les végétaux à traiter ou à détruire, sans risque de chute de gouttes de liquide sur les végétaux sains à préserver, ce qui est particulièrement souhaitable dans l'application de désherbants dits "systémiques", c'est-à-dire totaux, par opposition aux désherbants "sélectifs".

Dans une première forme d'exécution, la brosse est une brosse rotative en forme de cylindre garni de poils radiaux, qui peut tourner autour de son axe lorsqu'elle est promenée sur les végétaux. Cette brosse tourne par friction sur les végétaux à traiter. Dans ce cas, l'élément véhiculant le liquide par capillarité peut être une bande spongieuse qui, trempant dans le réservoir, sort de celui-ci vers le haut en direction de la brosse en restant constamment au-dessus du niveau du liquide dans le réservoir. Cette disposition évite que le liquide goutte de l'élément qui le véhicule en dehors des périodes d'utilisation du dispositif.

Dans une deuxième forme d'exécution, la brosse est une brosse non rotative formée par un ensemble de poils sensiblement parallèles entre eux qui reçoivent, à leur partie supérieure, le liquide apporté par l'élément véhiculant celui-ci par capillarité. On peut alors prévoir de manière avantageuse que le manche soit fixé au support de la brosse par l'intermédiaire d'un récipient formant le réservoir.

La description qui va suivre en regard des dessins annexés à titre d'exemples non limitatifs, permettra de bien comprendre comment l'invention peut être mise en pratique.

La figure 1 représente schématiquement, en coupe transversale, un dispositif selon l'invention dans une première forme d'exécution.

La figure 2 représente, à plus petite échelle, une coupe axiale de la brosse rotative du dispositif de la figure 1.

Les figures 3 et 4 représentent schématiquement, en coupe transversale, deux vues partielles d'un dispositif selon l'invention dans une deuxième forme d'exécution.

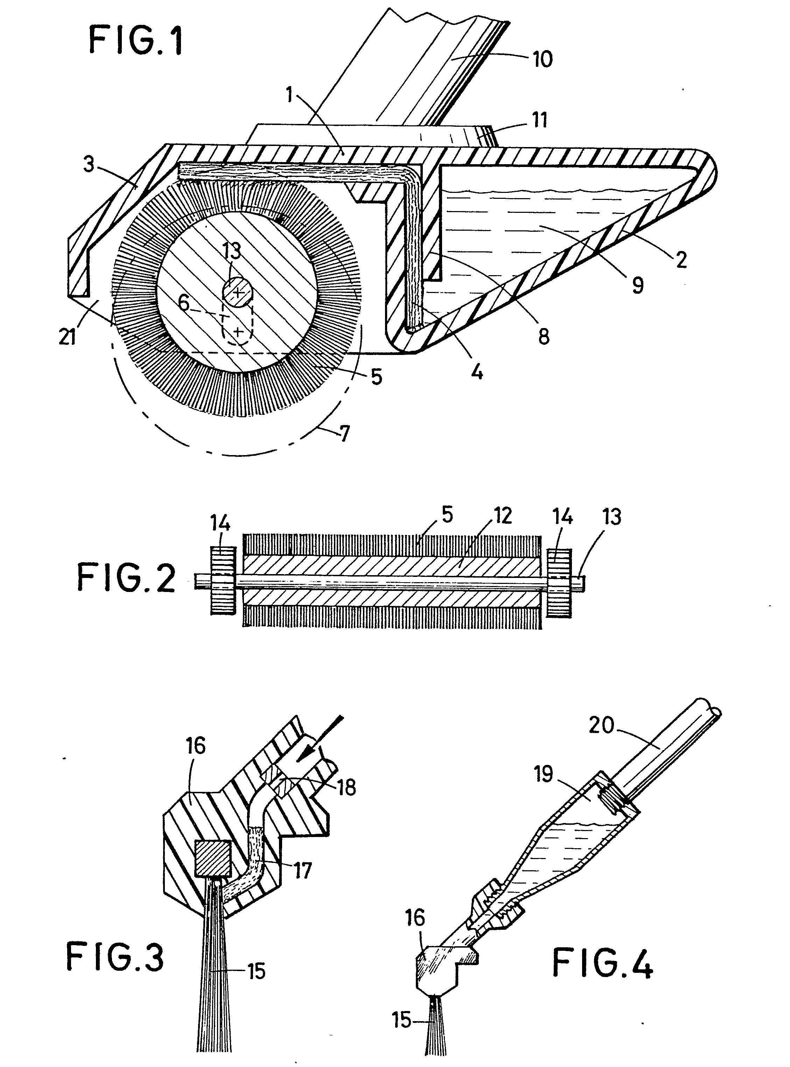

Le dispositif représenté à la figure 1 comporte un corps profilé en matière plastique 1 formant à sa partie arrière un réservoir 2 et à sa partie avant un capot 3. Sous ce dernier est disposée une brosse cylindrique 5 rotative, dont le corps 12 est traversé par un axe 13 (figure 2) engagé par ses extrémités dans des lumières 6 ménagées dans une paire de flasques 21 fermant le corps 1 à ses extrémités et constituant avec celui-ci le support de la brosse 5. Les lumières 6 sont oblongues, de sorte que la brosse 5 peut bouger verticalement dans son support entre une position de repos 7 et une position de travail où elle s'appuie sur les végétaux à traiter et où elle vient en contact par sa partie supérieure avec une bande spongieuse 4 qui plonge par son autre extrémité dans la réservoir 2 contenant le liquide de traitement 9, lequel est ainsi véhiculé et déposé sur la brosse 5 lorsqu'elle tourne par friction sur les végétaux ou sur le sol. On observera que, sur le chemin du liquide entre le réservoir 2 et la brosse 5, la bande spongieuse 4 ne présente aucune partie descendante et que sa portion extérieure au réservoir est située entièrement au-dessus du niveau du liquide 9 dans ledit réservoir. Son extrémité intérieure au réservoir est maintenue au fond de celui-ci par une cloison verticale 8 qui la presse légèrement et évite par ailleurs tout débordement du réservoir. Cette cloison descend de la paroi sommitale du réservoir 2 pour s'arrêter un peu au-dessus du fond de celui-ci.

L'ensemble décrit est muni d'un manche de manipulation 10 fixé au corps 1 par l'intermédiaire d'une embase 11.

4

La figure 2 montre que l'axe 13 de la brosse 5 peut être muni d'une paire de galets crantés 14 favorisant la rotation de la brosse.

Le dispositif représenté aux figures 3 et 4 comporte une large brosse 15 (du genre "queue de morue") dont les poils, orientés sensiblement verticalement, sont emprisonnés à leur partie supérieure dans un profilé 16 constituant leur support et relié rigidement à un manche de manipulation 20, par l'intermédiaire d'un réservoir 19 alimentant la brosse 15 par l'intermédiaire d'un élément spongieux 17 via un trou calibré 18 de régulation de débit. L'élément spongieux 17, en contact avec les poils de la brosse 15, régularise l'alimentation en liquide de celle-ci.

Un dispositif selon l'invention peut être utilisé manuellement. En vue du traitement de végétaux sur de grandes surfaces, il est possible de le motoriser.

5

REVENDICATIONS

1.- Dispositif d'application d'un liquide de traitement ou de destruction de végétaux, comprenant un réservoir qui reçoit ledit liquide, un organe applicateur monté dans un support et relié au réservoir par un élément véhiculant le liquide par capillarité, et un manche de préhension permettant de manipuler le dispositif, caracté- risé par le fait que le manche (10,20) est lié rigidement au support (21,16) de l'organe applicateur et que l'organe applicateur est une brosse (5,15).

2.- Dispositif selon la revendication 1, caractérisé par le fait que la brosse (5,15) est mobile dans son support (21,16) et entre en contact avec l'élément (4,17) véhiculant le liquide seulement lorsque le dispositif repose par ladite brosse sur les végétaux.

3.- Dispositif selon la revendication 1 ou 2, caractérisé par le fait que la brosse est une brosse rotative (5) en forme de cylindre garni de poils radiaux, qui peut tourner autour de son axe (13) lorsqu'elle est promenée sur les végétaux.

4.- Dispositif selon la revendication 3, caractérisé par le fait que l'élément véhiculant le liquide par capillarité est une bande spongieuse (4) qui, trempant dans le réservoir (2), sort de celui-ci vers le haut en direction de la brosse (5) en restant constamment au-dessus du niveau du liquide (12) dans le réservoir.

5.- Dispositif selon la revendication 1 ou 2, caractérisé par le fait que la brosse est une brosse non rotative (15) formée par un ensemble de poils sensiblement parallèles entre eux.

6.- Dispositif selon l'une quelconque des revendications 1, 2, 3 ou 5, caractérisé par le fait que le manche (20) est fixé au support (16) de la brosse (15) par l'intermédiaire d'un récipient (19) formant le réservoir.

0058611

**FIG.1**

**FIG.2**

**FIG.3**

**FIG.4**

**Office européen des brevets**

**RAPPORT DE RECHERCHE EUROPEENNE**

| Catégorie | Citation du document avec indication, en cas de besoin, des parties pertinentes | Revendication concernée |
|---|---|---|
| | **DOCUMENTS CONSIDERES COMME PERTINENTS** | |
| Y | GB - A - 1 508 709 (SOCIETE D'ETUDES ET DE CONSTRUCTIONS MECANIQUES DE CORBEIL) * Page 3, lignes 48-61; figure 3 * | 1-4 |
| Y | US - A - 3 232 006 (R.L. ALHERTON et al.) * En entier * | 1-3 |
| A | US - A - 3 257 753 (M.M. ZENNIE) * Colonne 2, lignes 46-63; figures 2-4 * | 1 |
| A | US - A - 1 764 952 (C.B. HAY) * Page 1, lignes 38-89; figures 2-3 * | 1 |
| A | US - A - 4 219 964 (J.E. DALE) | |
| A | US - A - 1 368 123 (S.A. DONALD-SON) | |
| A | US - A - 3 021 642 (B.E. EWING) | |
| A | US - A - 4 223 478 (D.P. McHUGH) | |

**CLASSEMENT DE LA DEMANDE (Int. Cl. 3)**

A 01 M 21/04

**DOMAINES TECHNIQUES RECHERCHES (Int. Cl. 3)**

A 01 M

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

X | Le présent rapport de recherche a été établi pour toutes les revendications

| Lieu de la recherche | Date d'achèvement de la recherche | Examinateur |
|---|---|---|
| La Haye | 05-04-1982 | NEHRDICH |

**OEB Form 1503.1 06.78**